# FASCICULE DE BREVET EUROPEEN

(11) **EP 1 434 812 B1**
(45) Date de publication et mention de la délivrance du brevet: **03.09.2014**
(21) Numéro de dépôt: 02727690.6
(22) Date de dépôt: 24.04.2002
(51) Int. Cl.: C08G 18/68, C08G 18/36, C09D 175/14, C09D 167/06

(54) **UTILISATION DE POLYMERES PREPARES A PARTIR DE DERIVES D'HUILES ET LEURS UTILISATIONS COMME LIANT OU ADDITIF DANS LES PEINTURES OU VERNIS**
VERWENDUNG VON AUS ÖLDERIVATEN HERGESTELLTEN POLYMEREN UND DEREN VERWENDUNG ALS KLEBSTOFF ODER ALS ZUSATZMITTEL FÜR BESCHICHTUNGSZUSAMMENSETZUNGEN ODER LACKE
USE OF POLYMERS PREPARED FROM OIL DERIVATIVES AND USES THEREOF AS BINDER OR ADDITIVE IN PAINTS OR VARNISHES

(30) Priorité: 24.04.2001 FR 0105501
(43) Date de publication de la demande: 07.07.2004
(73) Titulaire: Novance, 60206 Compiegne (FR)
(72) Inventeur: LEMOR, Alain, F-60200 Compiegne (FR); CATHERINE, Philippe, F-60160 Thiverny (FR); AULON, Patrice, F-60600 Jonquieres (FR)
(74) Mandataire: Hubert, Philippe
(86) Numéro de dépôt international: PCT/FR2002/001412
(87) Numéro de publication internationale: WO 2002/085966

(56) Documents cités:
- EP-A- 0 315 920
- EP-A- 0 424 745
- EP-A- 0 494 442
- GB-A- 785 241

## Description

La présente invention a pour objet l'utilisation de polymères comprenant des fonctions uréthanes ou esters préparés à partir de dérivés d'huiles insaturées, d'acides carboxyliques insaturés ou d'esters insaturés, comme liant ou additif et dans des formulations de peintures ou de vernis.

Les contraintes liées à la protection de l'environnement sont de plus en plus fortes, et dans de nombreux domaines, les fabricants de produits chimiques sont dans l'obligation de proposer des produits dont la teneur en composés dangereux pour l'environnement est diminuée.

Le domaine des peintures et vernis n'échappe pas à cette tendance. En effet, de nombreuses gammes des produits utilisés actuellement contiennent des quantités relativement élevées de solvants organiques (appelés aussi Composés Organiques Volatils). Il est à noter que parfois, même des formulations utilisées en phase aqueuse contiennent des quantités importantes de C.O.V.

Pour ce qui concerne plus spécialement les peintures décoratives (destinées au bâtiment), les produits actuellement sur le marché sont très efficaces car les polymères qu'ils renferment présentent un poids moléculaire relativement élevé. En effet, pour obtenir après application de la peinture, un film présentant toutes les caractéristiques requises, par exemple une résistance mécanique adéquate, un bon pouvoir couvrant, etc., il est souhaitable d'avoir un degré de polymérisation suffisamment élevé. Le problème lié à l'utilisation de tels polymères est en quelque sorte une conséquence de leur poids moléculaire élevé : lesdits polymères présentent des viscosités importantes et ne sont bien évidemment pas solubles dans l'eau. Il est donc nécessaire d'employer des solvants organiques de manière à pouvoir les mettre en oeuvre dans des formulations de peintures présentant les caractéristiques d'applicabilité souhaitées comme il est décrit dans le document EP 0 315 920. Ainsi, alors que la définition des peintures dites à haut extrait sec est telle que la teneur en C.O.V soit inférieure ou égale à 250 grammes par litre de formulation, les teneurs en C.O.V dans les formulations courantes sont bien souvent d'environ 400 g/l.

La contrainte de réduction des teneurs en C.O.V s'applique également pour les peintures industrielles lorsque la récupération des émissions de C.O.V n'est pas possible.

La présente invention a pour objet de proposer l'utilisation de polymères comprenant des fonctions uréthanes ou esters préparés pour être avantageusement utilisés en tant que liant ou additif dans des formulations pour peintures ou vernis, sans présenter les inconvénients des polymères mis en oeuvre jusqu'à présent.

Ainsi, la présente invention a pour objet l'utilisation comme liant ou additif dans des formulations de peintures ou vernis d'un polymère de type polyuréthane ou polyester, sous forme liquide présentant une viscosité dynamique d'au plus 30 dPa.s (mesure à 25°C, Brookfield : mobile 7 et 50 tr/min), ledit polymère étant obtenu dans un procédé dans lequel on met en oeuvre les étapes suivantes :
1) On met en contact au moins un premier réactif comprenant au moins deux radicaux choisis parmi le radical hydroxyle, le radical acide carboxylique ou leur combinaison, avec au moins un second réactif possédant au moins une fonction réagissant avec au moins l'un des radicaux du premier réactif ; l'un au moins des deux réactifs précités possédant une ou plusieurs doubles liaisons carbone-carbone activées ; la mise en contact étant réalisée éventuellement en présence d'un catalyseur ;
2) On met en contact le produit issu de l'étape précédente avec au moins un agent possédant deux fonctions isocyanates, ou deux fonctions acides carboxyliques ; éventuellement en présence d'un catalyseur.

On a en effet constaté que le polymère issu du procédé selon l'invention présentait une viscosité suffisamment basse pour ne pas nécessiter l'emploi de quantités élevées en solvant, voire pas de solvant du tout, pour pouvoir être incorporé dans des formulations pour peintures ou vernis. En effet, le polymère utilisé selon l'invention présente habituellement une viscosité (mesurée à 25°C, le Brookfield mobile 7 et 50 tr/min) variant entre 1 et 30 dPa.s (décipascals.second), ce qui correspond à un produit qui reste manipulable. Avantageusement, cette viscosité est atteinte avec une teneur en solvant inférieure ou égale à 250 g/l, et de manière toute particulièrement avantageuse sans solvant ou monomère réactif diluant.

Par ailleurs, le polymère issu du procédé utilisé selon l'invention donne, une fois appliqué sur le support à recouvrir, un film régulier restant souple avant de sécher, ce qui représente un avantage certain, notamment lorsque le support à recouvrir est fibreux. En effet, les composants de la formulation seront en mesure de pénétrer dans les fibres du support, permettant un accrochage plus efficace du revêtement sur ce dernier.

En outre, le polymère issu du procédé utilisé selon l'invention présente une réactivité appropriée pour le domaine dans lequel il est utilisé, car il forme un film sec en moins de 5 heures, en séchant à l'air ambiant. De plus, le polymère est parfaitement adapté pour l'emploi en tant qu'additif ou liant dans des formulations pour peintures ou vernis dont le processus de séchage est effectué sous catalyse, par exemple au moyen de rayons ultraviolets.

Mais d'autres caractéristiques et avantages de la présente invention apparaîtront plus clairement à la lecture de la description qui va suivre.

Ainsi que cela a été indiqué auparavant, le procédé de préparation des polymères utilisés selon la présente invention comprend la mise en oeuvre de deux étapes.

La première consiste à mettre en contact au moins un premier réactif comprenant au moins deux radicaux choisis parmi le radical hydroxyle, le radical acide carboxylique ou leur combinaison, avec au moins un second réactif possédant au moins une fonction réagissant avec au moins l'un des radicaux du premier réactif ; l'un au moins des deux réactifs précités possédant une ou plusieurs doubles liaisons carbone-carbone activées ; la mise en contact étant réalisée éventuellement en présence d'un catalyseur.

Plus particulièrement les premier et second réactifs comprennent 2 à 30 atomes de carbone dans la chaîne carbonée la plus longue. Lesdits réactifs sont linéaires, ramifiés ou cycliques et ils peuvent éventuellement comprendre une ou plusieurs doubles liaisons carbone-carbone activées.

Plus particulièrement, l'activation est réalisée par déplacement électronique (effet rencontré par exemple avec la conjugaison de deux doubles liaisons carbone-carbone) ou bien par un effet électroattractif (présence en α de la double liaison carbone-carbone, d'un radical attracteur d'électrons, comme un groupement carbonyle ou un hétéroatome).

Il est à noter que seul le premier réactif ou le second peut présenter une ou plusieurs doubles liaisons carbone-carbone activées au sens indiqué ci-dessus. Il est de même envisageable de mettre en oeuvre cette étape en utilisant un premier et un second réactifs possédant chacun une ou plusieurs doubles liaisons carbone-carbone activées.

Selon une première variante de l'invention, l'étape est mise en oeuvre en présence d'un premier réactif comprenant au moins deux radicaux hydroxyles.

A titre d'exemple de tels réactifs, on peut citer, sans intention de s'y limiter, les polyols comme le glycérol, le polyglycérol, le glycol, le propylène glycol, l'éthylène glycol, le polyéthylène glycol, le polypropylène glycol, le néopentylglycol, le pentaérythritol, l'hydroxypivalate de néopentylglycol, le dipentaérythritol, le triméthylolpropane, le butyl-2 éthyl-2 propanediol-1,3, le sorbitol, le mannitol, le xylitol, le mésoérythritol.

Peuvent de même être mis en oeuvre dans le cadre de cette première variante, les réactifs choisis parmi des esters partiels de type acryliques ou méthacryliques ou des éthers partiels de type vinylique des polyols précités, l'huile de ricin partiellement déshydratée ou ses dérivés.

Selon une deuxième variante de l'invention, l'étape 1) est mise en oeuvre en présence d'un premier réactif comprenant au moins deux radicaux acides carboxyliques. Il est à noter que dans ce cas, le premier réactif peut se présenter sous la forme d'un polyacide carboxylique ou bien d'un anhydride.

A titre d'exemples de réactifs susceptibles d'être employés selon cette deuxième variante, on peut citer l'acide fumarique, l'acide maléique, l'acide adipique, l'acide oxalique, l'acide subérique, l'acide azélaïque, l'acide pimellique, l'acide glutarique, l'acide succinique, l'acide brassylique, l'acide hexahydrophtalique, l'acide ou l'anhydride citraconique, l'acide ou l'anhydride itaconique. Il est de même possible de mettre en oeuvre un réactif choisi parmi les oligomères d'acides, comme par exemple les dimères d'acides.

Conviennent de même l'acide isophtalique, l'acide téréphtalique, l'anhydride phtalique, l'anhydride trimellitique.

Selon une troisième variante de mise en oeuvre de l'étape 1), le premier réactif comprend au moins un radical hydroxyle et au moins un radical carboxylique.

A titre d'exemple de tels réactifs, on peut citer notamment l'acide diméthylol propionique, l'acide ricinoléique, l'acide lactique, acide maléique.

Notons que l'on ne sortirait pas du cadre de la présente invention en effectuant l'étape 1) en ajoutant au premier réactif, au moins un réactif supplémentaire. Ce réactif supplémentaire est plus particulièrement choisi parmi les composés linéaires, ramifiés ou cycliques, comprenant 2 à 30 atomes de carbone dans la chaîne carbonée la plus longue, comprenant une fonction hydroxyle ou une fonction carboxylique et présentant au moins une double liaison carbone-carbone activée au sens indiqué auparavant.

Dans le cas où un tel réactif supplémentaire est présent, il peut être avantageusement choisi parmi l'alcool allylique, l'alcool vinylique, ou des alcools gras insaturés aux doubles liaisons conjuguées, notamment.

On pourrait de même utiliser au moins un réactif supplémentaire choisi parmi l'acide acrylique, l'acide méthacrylique, l'acide lindérique, l'acide éléostéarique, l'acide parinarique, l'acide linoléique et l'acide linolénique aux doubles liaisons conjuguées, l'acide isanique, l'acide stéarodonique, etc.

Il est à noter que le choix du réactif supplémentaire, s'il est présent, a lieu de préférence en fonction de la nature du premier réactif. Ainsi lorsque le premier réactif comprend au moins deux radicaux hydroxyles, le réactif supplémentaire est plus particulièrement choisi parmi les composés comprenant un radical acide carboxylique. Et inversement, lorsque le premier réactif comprend au moins deux radicaux acide carboxylique, le réactif supplémentaire est plus particulièrement choisi parmi les composés comprenant un radical hydroxyle.

Enfin, le réactif supplémentaire, s'il est présent, est utilisé dans des proportions telles que le nombre de fonctions hydroxyle ou carboxylique dudit réactif supplémentaire représente 1 à 50 %, de préférence 1 à 20 %, du nombre de fonctions hydroxyle ou carboxyle du premier réactif.

Ainsi que cela a été mentionné auparavant, le second réactif mis en oeuvre dans l'étape 1) du procédé de préparation des polymères utilisés selon l'invention possède au moins une fonction réagissant avec au moins l'un des radicaux du premier réactif, et possède au moins deux doubles liaisons carbone-carbone conjuguées.

De plus, le second réactif comprend plus particulièrement 2 à 30 atomes de carbone dans la chaîne carbonée la plus longue. Il est en outre linéaire, ramifié ou cyclique.

Plus particulièrement, le second réactif comprend au moins une fonction acide carboxylique ou ester carboxylique ou hydroxyle, selon le ou les radicaux présents dans le premier réactif.

Plus précisément, lorsque le premier réactif comprend un ou plusieurs radicaux hydroxyles, le second réactif peut comprendre une ou plusieurs fonctions acides carboxyliques ou esters d'acides carboxyliques. Lorsque le premier réactif comprend un ou plusieurs radicaux acides carboxyliques, le second réactif comprend une ou plusieurs fonctions hydroxyles ou esters d'acides carboxyliques.

Selon un mode de réalisation particulier de l'invention, si l'on met en oeuvre l'étape 1) en présence d'un premier réactif comprenant au moins deux radicaux acides carboxyliques et d'au moins un second réactif comprenant au moins une fonction ester, il peut être préférable, préalablement à l'étape 2), de soumettre le produit issu de ladite étape 1), une nouvelle fois à une étape 1) en présence d'au moins un réactif comprenant au moins deux radicaux hydroxyles.

En ce qui concerne la proportion de doubles liaisons carbone-carbone conjuguées présentes dans le second réactif, il est à noter que celle-ci représente avantageusement au moins 15 % en moles de la totalité des doubles liaisons. Plus particulièrement, la proportion en doubles liaisons conjuguées représente au moins 20 % en moles de la totalité des doubles liaisons. Il est indiqué que la teneur en doubles liaisons conjuguées est évaluée par spectrométrie UV (par exemple selon la norme ASTM D 1358 - 58 où le solvant est l'isooctane ; cuves en silice 1 cm ; solvant : cyclohexane).

A titre d'exemple de second réactif choisi parmi les acides, on peut citer par exemple l'acide linoléique - 9,11, l'acide éléostéarique, l'acide parinarique, l'acide isanique (triples liaisons conjuguées).

A titre d'exemple de second réactif choisi parmi les alcools, on peut citer par exemple l'alcool linoléique - 9,11, l'alcool éléostéarique, l'alcool parinarique...

A titre d'exemple de seconds réactifs choisis parmi les huiles ou dérivés, on peut citer plus particulièrement l'huile de calendula, l'huile de ricin déshydratée, les huiles végétales insaturées isomérisées chimiquement...

L'étape 1) est par ailleurs de préférence mise en oeuvre avec des teneurs en premier et second réactifs telles que la quantité molaire totale en radicaux du premier réactif représente un excès de 5 à 50 % par rapport aux fonctions du second réactif.

Par ailleurs, l'étape 1) est de manière avantageuse, effectuée à une température comprise entre 190 et 230°C.

De plus, l'étape 1) peut être mise en oeuvre en présence d'un catalyseur, bien que la présence de ce type de composé ne soit pas obligatoire. Ainsi, à titre d'exemple, on peut citer les catalyseurs basiques, comme les hydroxydes de métaux alcalins, tels que la soude, la potasse, la lithine. Il est de même envisageable de mettre en oeuvre des catalyseurs métalliques, comme par exemples des sels d'étain.

L'ordre d'introduction des réactifs est réalisé de manière classique. A titre de simple illustration, le premier réactif est introduit dans le second, ce dernier étant éventuellement mélangé avec le catalyseur.

Il est à noter qu'il n'est pas nécessaire de mettre en oeuvre cette étape sous une atmosphère ne réagissant pas avec le mélange réactionnel dans les conditions de réaction. Cependant, il peut être préférable de procéder dans de telles conditions. Par conséquent, on met de préférence en oeuvre ladite étape sous une atmosphère comprenant de l'azote, du dioxyde de carbone, un gaz rare (argon, hélium, etc.).

Un mode de réalisation préféré de la présente invention consiste à mettre en oeuvre lors de l'étape 1) au moins un second réactif obtenu par une réaction d'isomérisation d'un ou plusieurs composés possédant au moins une double liaison carbone-carbone et une fonction précurseur d'une double liaison (comme par exemple une fonction hydroxyle) ou au moins deux doubles liaisons carbone-carbone. En outre, ce ou ces composés sont choisis parmi les huiles ou leurs dérivés, les acides carboxyliques ou leurs dérivés, ou leurs mélanges.

L'objectif de cette étape préalable est d'isomériser le composé de manière à augmenter la teneur de doubles liaisons carbone-carbone conjuguées.

Selon un premier mode de réalisation de l'invention, le composé à isomériser est choisi parmi les huiles végétales ou animales, ainsi que leurs dérivés obtenus après des réactions d'alcoolyse.

En tant qu'huiles d'origine animale, on peut citer entre autres, l'huile de cachalot, de baleine, de sardine, de hareng, de squale, de foie de morue.

A titres d'exemples d'huiles d'origine végétale, on peut mentionner, entre autres, l'huile de colza, de tournesol, d'arachide, d'olive, de maïs, de soja, de lin, de chanvre, de pépins de raisin, de graines de coton, de ricin, de carthame, de luffa cylindrica, de caméline, de calendula.

De préférence, on met en oeuvre l'huile de tournesol, l'huile de soja, l'huile de lin, l'huile de ricin, l'huile de pépins de raisins, l'huile de carthame.

Notons que les huiles ou leurs dérivés peuvent être utilisés sous forme brute ou bien encore raffinée.

En ce qui concerne les dérivés des huiles, on entend plus particulièrement, mais sans toutefois s'y limiter, les produits d'alcoolyse.

Selon un second mode de réalisation de l'invention, le composé à isomériser est choisi parmi les acides carboxyliques linéaires, ramifiés ou cycliques, possédant au moins une double liaison carbone-carbone, comprenant 4 à 40 atomes de carbone dans la chaîne la plus longue, de préférence comprenant 7 à 40 atomes de carbone, et comprenant éventuellement une ou plusieurs fonctions hydroxyle, ou parmi les esters de tels acides carboxyliques pour lesquels la partie dérivant de l'alcool ou du polyol est linéaire, ramifiée ou cyclique, comprend 1 à 30 atomes de carbone dans la chaîne la plus longue et comprend éventuellement une ou plusieurs doubles liaison carbone-carbone.

De préférence, le composé à isomériser est choisi parmi les acides carboxyliques comprenant au moins un radical aliphatique linéaire ou ramifié, ou parmi les esters de tels acides carboxyliques.

Plus particulièrement, le radical porté par la fonction acide carboxylique présente au moins une double liaison carbone-carbone. De préférence, ledit radical porte 1 à 5 doubles liaisons carbone-carbone, plus particulièrement 1 à 3 doubles liaisons carbone-carbone.

Enfin, il peut comprendre une ou plusieurs fonctions hydroxyles.

En ce qui concerne la partie acide carboxylique, on peut citer sans intention de s'y limiter, les acides gras insaturés présentant deux doubles liaisons tels que l'acide linoléique ; les acides gras insaturés présentant 3 doubles liaisons tels que l'acide linolénique ; les acides gras insaturés présentant plus de 4 doubles liaisons tels que l'acide isanique, l'acide stéarodonique, l'acide arachidonique ; les acides gras insaturés porteurs de groupe hydroxyle tel que l'acide ricinoléique. On peut de même utiliser les acides gras de tall oil.

Bien évidemment, on ne sortirait pas du cadre de la présente invention en mettant en oeuvre un mélange de tels acides.

En ce qui concerne le radical provenant de l'alcool, il représente plus particulièrement un radical saturé ou non, linéaire, ramifié ou cyclique, comprenant 1 à 30 atomes de carbone, de préférence 1 à 10 atomes de carbone. Notons que ledit radical peut éventuellement comprendre un ou plusieurs groupements hydroxyles, éventuellement estérifiés.

En ce qui concerne la partie alcool de l'ester, on peut citer par exemple le méthanol, l'éthanol, le propanol, l'isopropanol, le butanol, l'isobutanol, l'octanol, le 2 éthyl hexanol, le glycérol, le glycol, l'éthylène glycol, le propylène glycol, le néopentyl glycol, le pentaérythritol, l'hydroxypivalate de néopentylglycol, le dipentaérythritol, le triméthylolpropane, le sorbitol, le mannitol, le xylitol, le mésoérythritol. Dans le cas où l'alcool provient d'un polyol, toutes les fonctions alcool ou seulement l'une ou plusieurs d'entre elles peuvent être estérifiées.

La réaction d'isomérisation peut être réalisée au moyen d'un traitement thermique. Plus particulièrement, ce dernier peut être mis en oeuvre de manière appropriée, à une température comprise entre 200 et 280°C, de préférence entre 220 et 280°C.

De plus, le traitement thermique peut être réalisé en présence d'un catalyseur bien que la présence d'un tel composé ne soit pas obligatoire.

A titre de catalyseurs convenables, on peut citer, entre autres, l'anthraquinone, l'anhydride sulfureux, les sels solubles de nickel, de palladium, mais aussi les zéolithes, les résines échangeuses d'ions sous forme acide ou basique, les bases comme l'hydroxyde de sodium, de potassium, les acides forts comme l'acide sulfurique, l'acide phosphorique.

La quantité de catalyseur peut être déterminée sans difficulté par l'homme du métier.

L'opération a lieu habituellement sous agitation.

Selon une autre caractéristique préférée, la réaction d'isomérisation est effectuée sous une atmosphère dépourvue d'oxygène.

Ainsi, de manière avantageuse, l'isomérisation est réalisée sous azote ou sous un gaz rare, comme l'argon, l'hélium, le néon, ces gaz pouvant être employés seuls ou en mélange.

La durée de cette étape est plus particulièrement telle que l'on obtienne un composé comprenant au moins 15 % en moles, plus particulièrement au moins 20 % en moles, de double liaisons carbone-carbone conjuguées, par rapport à la totalité des doubles liaisons carbone-carbone présentes dans le composé obtenu après isomérisation.

A titre de simple illustration, la durée de cette première étape est généralement de l'ordre de une à deux heures.

A l'issue de cette étape préalable d'isomérisation, le produit présente plus particulièrement une viscosité cinématique inférieure ou égale à 500 mm²/s, et de préférence inférieure ou égale à 300 mm²/s (mesurée à 25°C au moyen de tubes volumétriques de type Ubelhod).

La deuxième étape du procédé de préparation des polymères utilisés selon l'invention consiste à mettre en contact le composé issu de l'étape 1), avec un agent possédant deux fonctions isocyanates ou deux fonctions acides carboxyliques.

La première variante de cette deuxième étape consiste à mettre en oeuvre au moins un agent possédant deux fonctions isocyanates.

De préférence, l'agent présente au moins un radical hydrocarboné comprenant 3 à 30 atomes de carbone, linéaire, ramifié ou cyclique, présentant éventuellement une ou plusieurs doubles liaisons carbone-carbone, ou aromatique éventuellement porteur d'un ou plusieurs substituants hydrocarbonés, linéaires ou ramifiés, saturés ou non, comprenant 1 à 10 atomes de carbone.

Plus particulièrement ledit radical hydrocarboné comprend 3 à 20 atomes de carbone, linéaire, ramifié ou cyclique, présentant éventuellement une ou plusieurs doubles liaisons carbone-carbone, ou aromatique éventuellement porteur d'un ou plusieurs radicaux alkyles comprenant 1 à 4 atomes de carbone.

A titre d'exemple d'agents convenables à la mise en oeuvre de cette étape, on peut citer l'isophorone diisocyanate, l'hexaméthylène diisocyanate, le toluène diisocyanate, le diphényl méthane diisocyanate, le xylylène diisocyanate.

Durant cette étape, la teneur en agent comprenant deux fonctions isocyanates représente plus particulièrement 2 à 30 % en poids du composé issu de l'étape 2), de préférence 5 à 15 % en poids du composé issu de l'étape 2). De préférence, les fonctions isocyanates ne sont pas en excès par rapport aux fonctions hydroxyles du composé de l'étape 1.

Il est possible de mettre en oeuvre cette étape 2) en présence d'un agent supplémentaire. Celui-ci est plus particulièrement choisi parmi les composés linéaires, ramifiés ou cycliques, comprenant 2 à 30 atomes de carbone dans la chaîne carbonée la plus longue, comprenant une fonction hydroxyle et présentant au moins une double liaison carbone-carbone activée au sens indiqué auparavant (déplacement électronique ou bien effet électroattractif).

Un tel agent peut notamment être choisi parmi l'alcool allylique, l'alcool acrylique, l'alcool vinylique, notamment.

S'il est présent, la teneur en agent supplémentaire est telle que le nombre de fonctions hydroxyle dudit agent supplémentaire représente 1 à 50 %, de préférence 1 à 20 %, du nombre de fonctions hydroxyle du composé issu de l'étape 1).

La réaction peut être réalisée en présence ou non d'un catalyseur. De préférence, l'étape 2) est réalisée en présence d'un catalyseur. Celui-ci est plus particulièrement choisi parmi les sels d'étain, et notamment les alcanoates de dialkylétain, tel que le dilaurate de dibutylétain.

Cette étape du procédé est de préférence effectuée à une température comprise entre 50 et 100°C.

L'atmosphère sous laquelle elle est réalisée est de préférence exempte d'eau.

L'opération a lieu habituellement sous agitation.

La deuxième variante de cette étape consiste à mettre en oeuvre au moins un agent possédant deux fonctions acides carboxyliques.

Plus particulièrement l'agent comprend 2 à 30 atomes de carbone dans la chaîne carbonée la plus longue, linéaire, ramifié ou cyclique, présentant éventuellement une ou plusieurs doubles liaisons carbone-carbone conjuguées ou non, ou aromatique.

Il est à noter que dans ce cas, l'agent peut se présenter sous la forme d'un polyacide carboxylique ou bien d'un anhydride.

Les composés polyacides cités en tant que premier réactif, mis en oeuvre lors de l'étape 1), peuvent être avantageusement mis en oeuvre dans cette deuxième étape. On pourra donc se référer à cette liste précédemment indiquée.

A titre d'exemples d'agents mis en oeuvre de manière préférée, citons plus particulièrement les oligomères d'acides, comme par exemple les dimères d'acides, l'acide isophtalique, l'acide téréphtalique, l'anhydride phtalique.

Là encore, on ne sortirait pas du cadre de la présente invention en effectuant cette étape en présence d'au moins un agent supplémentaire. Plus particulièrement, cet agent est choisi parmi les composés linéaires, ramifiés ou cycliques, comprenant 2 à 30 atomes de carbone dans la chaîne carbonée la plus longue, comprenant une fonction hydroxyle ou carboxylique et présentant au moins une double liaison carbone-carbone activée au sens donné plus haut.

A titre d'exemples d'agents supplémentaire préférés, on peut se référer à la liste d'agents supplémentaires éventuellement mis en oeuvre lors de l'étape 1). De préférence, on met en oeuvre des agents supplémentaires comprenant une fonction acide carboxylique ou hydroxyle.

S'il est présent, la teneur en agent supplémentaire est telle que le nombre de fonctions hydroxyle ou carboxylique dudit agent supplémentaire représente 1 à 50 %, de préférence 1 à 20 %, du nombre de fonctions hydroxyle composé issu de l'étape 1).

La réaction peut être réalisée en présence ou non d'un catalyseur. Les catalyseurs classiques d'estérification conviennent à la mise en oeuvre de cette variante. Ainsi des catalyseurs basiques, comme les hydroxydes de métaux alcalins, tels que la soude, la potasse, la lithine peuvent être employés. Il est de même envisageable de mettre en oeuvre des catalyseurs métalliques, comme par exemples des sels d'étain.

Cette étape du procédé est de manière avantageuse effectuée à une température comprise entre 180 et 250°C, de préférence entre 200 et 230°C.

L'atmosphère sous laquelle est effectuée la réaction est de préférence inerte dans les conditions de réactions, bien que cela ne soit pas obligatoire. De manière avantageuse, la réaction est mise en oeuvre sous azote.

L'opération a lieu habituellement sous agitation.

De plus la réaction est de manière préférée, mise en oeuvre de telle sorte que l'eau soit éliminée au cours de son apparition dans le mélange réactionnel. Cette séparation se fait classiquement par distillation sous une pression voisine de la pression atmosphérique ou sous vide, ou bien encore par entraînement azéotropique. Dans le cadre de cette dernière possibilité, le solvant est choisi de manière usuelle par l'homme de l'art. A titre d'exemple d'un tel solvant, on peut citer le xylène. A l'issue de la réaction, le solvant peut être éliminé du mélange réactionnel de manière classique.

Le polymère ainsi obtenu se présente de manière particulièrement avantageuse sous la forme d'un liquide. En outre, ce liquide présente plus particulièrement une viscosité dynamique d'au plus 30 dPa.s (mesurée à 25°C, Brookfield : mobile 7 et 50 tr/mn).

La présente invention concerne donc l'utilisation des polymères issus du procédé qui vient d'être décrit en tant que liant ou additif pour des peintures ou des vernis. Les dites peintures ou vernis sont utilisables sur tous supports dans le bâtiment et en particulier sur le bois.

Ces formulations contiennent des additifs classiques dans le domaine, comme les pigments ou les charges, et peuvent être appliquées sur le support, de manière habituelle, par exemple au moyen d'un pinceau d'un rouleau ou encore d'un pistolet.

Ils sont tout particulièrement adaptés pour entrer dans des formulations dont l'extrait sec est élevé, soit une teneur en COV inférieure à 250 g/l. Avantageusement, la teneur en solvant organique (COV) est inférieure à 100 g/l.

Les polymères peuvent entrer dans la composition de formulations destinées à être séchées à l'air ou encore au moyen d'une lampe à rayons ultraviolets.

Par ailleurs, le séchage a lieu plus particulièrement à une température comprise entre 10 et 50°C, de préférence à température ambiante.

La réactivité des polymères obtenus selon l'invention est telle qu'il peut ne pas être nécessaire d'introduire dans la formulation pour peinture ou vernis, d'agent siccatif. Bien évidemment, il n'est pas exclu d'ajouter dans lesdites formulations de tels agents, qui sont en général des catalyseurs à base de sels métalliques, comme les alcanoates de calcium, cobalt, zirconium.

L'avantage apporté par l'utilisation des polymères obtenus selon l'invention est que l'on peut les mettre en oeuvre en utilisant des teneurs beaucoup moins importantes en solvants, que dans les formulations classiques.

## Revendications

1. Utilisation comme liant ou additif dans des formulations de peintures ou vernis d'un polymère de type polyuréthane ou polyester, sous forme liquide présentant une viscosité dynamique d'au plus 30 dPa.s (mesure à 25°C, Brookfield : mobile 7 et 50 tr/min), ledit polymère étant obtenu dans un procédé dans lequel on met en oeuvre les étapes suivantes :
1) On met en contact au moins un premier réactif comprenant au moins deux radicaux choisis parmi le radical hydroxyle, le radical acide carboxylique ou leur combinaison, avec au moins un second réactif possédant au moins une fonction réagissant avec au moins l'un des radicaux du premier réactif ; l'un au moins des deux réactifs précités possédant une ou plusieurs doubles liaisons carbone-carbone activées ; la mise en contact étant réalisée éventuellement en présence d'un catalyseur ;
2) On met en contact le produit issu de l'étape précédente avec au moins un agent possédant deux fonctions isocyanates, ou deux fonctions acides carboxyliques ; éventuellement en présence d'un catalyseur.

2. Utilisation selon la revendication 1, **caractérisée en ce que** le premier réactif comprend 2 à 30 atomes de carbone dans la chaîne carbonée la plus longue, linéaire, ramifié ou cyclique, ou aromatique.

3. Utilisation selon la revendication 2, **caractérisée en ce que** le premier réactif est choisi parmi :
- les polyols comme le glycérol, le glycol, le propylène glycol, l'éthylène glycol, le polyéthylène glycol, le polypropylène glycol, le néopentylglycol, le pentaérythritol, l'hydroxypivalate de néopentylglycol, le dipentaérythritol, le triméthylolpropane, le butyl 2 éthyl 2 1,3- propanediol, le sorbitol, le mannitol, le xylitol, le mésoérythritol.
- les esters partiels de type acryliques ou méthacryliques ou des éthers partiels de type vinylique des polyols précités, l'huile de ricin partiellement déshydratée ou ses dérivés.

4. Utilisation selon la revendication 2, **caractérisée en ce que** le premier réactif est choisi parmi les composés suivants :
- l'acide fumarique, l'acide maléique, l'acide adipique, l'acide oxalique, l'acide subérique, l'acide azélaïque, l'acide pimellique, l'acide glutarique, l'acide succinique; l'acide brassylique, l'acide hexahydrophtalique, l'acide ou l'anhydride citraconique, l'acide ou l'anhydride itaconique ;
- l'acide isophtalique, l'acide téréphtalique, l'anhydride phtalique, l'acide ou l'anhydride trimellitique, les oligomères d'acides.

5. Utilisation selon la revendication 2, **caractérisée en ce que** le premier réactif est choisi parmi l'acide diméthylol propionique, l'acide ricinoléique.

6. Utilisation selon l'une des revendications 1 à 5, **caractérisée en ce que** l'on ajoute au premier réactif au moins un réactif supplémentaire linéaire, ramifié ou cyclique, comprenant 2 à 30 atomes de carbone dans la chaîne la plus longue, comprenant une fonction hydroxyle ou une fonction carboxylique et présentant au moins une double liaison carbone-carbone activée.

7. Utilisation selon la revendication 6, **caractérisée en ce que** le réactif supplémentaire est choisi parmi :
- l'alcool allylique, l'alcool vinylique.
- l'acide acrylique, l'acide méthacrylique, l'acide lindérique, l'acide éléostéarique, l'acide parinarique, l'acide linoléique et l'acide linolénique aux doubles liaisons conjuguées, l'acide isanique, l'acide stéarodonique.

8. Utilisation selon l'une quelconque des revendications 1 à 7, **caractérisée en ce que** le second réactif présente au moins une fonction acide carboxylique ou ester carboxylique ou hydroxyle, selon le ou les radicaux présents dans le premier réactif.

9. Utilisation selon la revendication précédente, **caractérisée en ce que**, si l'on met en oeuvre l'étape 1) en présence d'un premier réactif comprenant au moins deux radicaux acides carboxyliques et d'au moins un second réactif comprenant au moins une fonction ester, le produit issu de ladite étape 1), préalablement à l'étape 2), est soumis une nouvelle fois à une étape 1) en présence d'au moins un réactif comprenant au moins deux radicaux hydroxyles.

10. Utilisation selon la revendication 9, **caractérisée en ce que** le second réactif est obtenu par une réaction d'isomérisation d'au moins un composé possédant au moins une double liaison carbone-carbone et choisi parmi les huiles ou leurs dérivés, les acides carboxyliques ou leurs dérivés, ou leurs mélanges.

11. Utilisation selon la revendication 10, **caractérisée en ce que** ledit composé est choisi parmi les huiles végétales ou animales, ainsi que leurs dérivés obtenus après des réactions d'alcoolyse.

12. Utilisation selon la revendication 10, **caractérisée en ce que** le composé est choisi :
- parmi les acides carboxyliques linéaires, ramifiés ou cycliques, possédant au moins une double liaison carbone-carbone, comprenant 4 à 40 atomes de carbone dans la chaîne la plus longue, de préférence comprenant 7 à 40 atomes de carbone, et comprenant éventuellement une ou plusieurs fonctions hydroxyle, ou
- parmi les esters de tels acides carboxyliques pour lesquels la partie dérivant de l'alcool ou du polyol est linéaire ou ramifiée, comprend 1 à 30 atomes de carbone dans la chaîne la plus longue et comprend éventuellement une ou plusieurs doubles liaison carbone-carbone.

13. Utilisation selon l'une des revendications 10 à 12, **caractérisée en ce que** l'on effectue la réaction d'isomérisation à une température comprise entre 200 et 280°C.

14. Utilisation selon l'une des revendications 10 à 13, **caractérisée en ce que** l'on effectue la réaction d'isomérisation en présence d'un catalyseur choisi parmi l'anhydride sulfureux, les sels solubles de nickel, de palladium, les zéolithes, les résines échangeuses d'ions sous forme acide ou basique, les bases comme l'hydroxyde de sodium, de potassium, les acides forts comme l'acide sulfurique, l'acide phosphorique.

15. Utilisation selon l'une des revendications 10 à 14, **caractérisée en ce que** l'on effectue la réaction d'isomérisation sous une atmosphère dépourvue d'oxygène.

16. Utilisation selon l'une des revendications 1 à 15, **caractérisée en ce que** la quantité molaire totale en radicaux du premier réactif représente un excès de 5 à 50 % par rapport aux fonctions du second réactif.

17. Utilisation selon l'une des revendications 1 à 16, **caractérisée en ce que** l'on effectue l'étape 1) à une température comprise entre 190 et 230°C.

18. Utilisation selon l'une de revendications 1 à 17, **caractérisée en ce que** l'on effectue l'étape 1) en présence d'un catalyseur choisi parmi les hydroxydes de métaux alcalins.

19. Utilisation selon l'une des revendications 1 à 18, **caractérisée en ce que** l'on effectue l'étape 2) en présence d'au moins un agent comprenant deux fonctions isocyanates et présentant au moins un radical hydrocarboné comprenant 3 à 30 atomes de carbone, linéaire, ramifié ou cyclique, présentant éventuellement une ou plusieurs doubles liaisons carbone-carbone, ou aromatique éventuellement porteur d'un ou plusieurs substituants hydrocarbonés, linéaires ou ramifiés, saturés ou non; comprenant 1 à 10 atomes de carbone.

20. Utilisation selon la revendication 19, **caractérisée en ce que** l'agent est choisi parmi l'isophorone diisocyanate, l'hexaméthylène diisocyanate, le toluène diisocyanate, le diphényl diméthyl diisocyanate, le xylylène diisocyanate.

21. Utilisation selon l'une des revendications 19 ou 20, **caractérisée en ce que** la teneur en agent représente 2 à 30 %, de préférence 5 à 15 % en poids du composé issu de l'étape 2).

22. Utilisation selon l'une des revendications 19 à 21, **caractérisée en ce que** l'étape 2) est réalisée en l'absence d'eau.

23. Utilisation selon l'une des revendications 19 à 22, **caractérisée en ce que** l'on met en oeuvre l'étape 2) en présence d'un agent supplémentaire choisi parmi les composés linéaires, ramifiés ou cycliques, comprenant 2 à 30 atomes de carbone dans la chaîne carbonée la plus longue, comprenant une fonction hydroxyle et présentant au moins une double liaison carbone-carbone activée.

24. Utilisation selon la revendication 23, **caractérisée en ce que** l'agent supplémentaire est choisi parmi l'alcool allylique, l'alcool acrylique, l'alcool vinylique.

25. Utilisation selon l'une des revendications 23 ou 24, **caractérisée en ce que** la teneur en agent supplémentaire est telle que le nombre de fonctions hydroxyle dudit agent supplémentaire représente 1 à 50 %, de préférence 1 à 20 %, du nombre de fonctions hydroxyle composé issu de l'étape 1).

26. Utilisation selon l'une des revendications 19 à 25, **caractérisée en ce que** l'on effectue l'étape 2) en présence d'un catalyseur choisi parmi les sels d'étain.

27. Utilisation selon l'une des revendications 19 à 28, **caractérisée en ce que** l'on effectue l'étape 2) à une température comprise entre 50 et 100°C.

28. Utilisation selon l'une des revendications 1 à 18, **caractérisée en ce que** l'on effectue l'étape 2) en présence d'au moins un agent comprenant deux fonctions acides carboxyliques, et présentant au moins un radical hydrocarboné comprenant 2 à 30 atomes de carbone, linéaire, ramifié ou cyclique, présentant éventuellement une ou plusieurs doubles liaisons carbone-carbone, ou aromatique éventuellement porteur d'un ou plusieurs substituants hydrocarbonés, linéaires ou ramifiés, saturés ou non; comprenant 1 à 10 atomes de carbone.

29. Utilisation selon la revendication 28, **caractérisée en ce que** l'agent est choisi parmi l'acide fumarique, l'acide maléique, l'acide adipique, l'acide oxalique, l'acide subérique, l'acide azélaïque, l'acide pimellique, l'acide glutarique, l'acide succinique; l'acide brassylique, l'acide hexahydrophtalique, l'acide ou l'anhydride citraconique, l'acide ou l'anhydride itaconique, l'acide isophtalique, l'acide téréphtalique, l'anhydride phtalique, "acide ou l'anhydride trimellitique, les oligomères d'acides.

30. Utilisation selon l'une des revendications 28 ou 29, **caractérisée en ce que** l'étape est effectuée en présence d'au moins un agent supplémentaire choisi parmi les composés linéaires, ramifiés ou cycliques, comprenant 2 à 30 atomes de carbone dans la chaîne carbonée la plus longue, comprenant une fonction carboxylique ou hydroxyle et présentant au moins une double liaison carbone-carbone activée.

31. Utilisation selon la revendication 30, **caractérisée en ce que** l'agent supplémentaire est choisi parmi l'alcool allylique, l'alcool acrylique, l'alcool vinylique, l'acide acrylique, l'acide méthacrylique l'acide lindérique, l'acide myristoléique, l'acide palmitoléique, l'acide oléique, l'acide pétrosélénique, l'acide érucique, l'acide linoléique, l'acide linolénique, l'acide isanique, l'acide stéarodonique, l'acide arachidonique.

32. Utilisation selon l'une des revendications 30 à 31, **caractérisée en ce que** la teneur en agent supplémentaire est telle que le nombre de fonctions hydroxyles ou carboxyliques dudit agent supplémentaire représente 1 à 50 %, de préférence 1 à 20 %, du nombre de fonctions hydroxyles du composé issu de l'étape 1).

33. Utilisation selon l'une des revendications 28 à 33, **caractérisée en ce que** la réaction est réalisée en présence d'un catalyseur d'estérification.

34. Utilisation selon l'une des revendications 28 à 33, **caractérisée en ce que** la réaction est réalisée à une température comprise entre 180 et 250°C, de préférence entre 200 et 230°C.

35. Utilisation selon l'une des revendications 28 à 34, **caractérisée en ce que** la réaction est mise en oeuvre de telle sorte que l'eau soit éliminée au cours de son apparition dans le mélange réactionnel.

36. Utilisation selon l'une de revendications 1 à 35, **caractérisée en ce que** le polymère forme un film sec en moins de 5 heures, en séchant à l'air ambiant.

## Patentansprüche

1. Verwendung als Bindemittel oder Zusatz in Farben- oder Lackformulierungen, eines Polymers vom Typ Polyurethan oder Polyester, in flüssiger Form, mit einer dynamischen Viskosität von höchstens 30 dPa.s (Messung bei 25 °C, Brookfield: Spindle 7 und 50 U/min), wobei das Polymer in einem Verfahren erhalten wird, bei dem die folgenden Schritte durchgeführt werden:
1) wenigstens ein erstes Reagens, das wenigstens zwei Radikale, ausgewählt aus dem Hydroxylradikal, dem Carbonsäurerest oder deren Kombination, umfasst, wird mit wenigstens einem zweiten Reagens, das wenigstens eine Funktion besitzt, die mit wenigstens einem der Radikale des ersten Reagens reagiert, in Kontakt gebracht; wobei wenigstens eines der beiden vorgenannten Reagenzien eine oder mehrere aktivierte Kohlenstoff-Kohlenstoff-Doppelbindungen besitzt; wobei das Inkontaktbringen eventuell in Gegenwart eines Katalysators vollzogen wird;
2) das aus dem vorhergehenden Schritt hervorgegangene Produkt wird mit wenigstens einem Agens, das zwei Isocyanatfunktionen oder zwei Carbonsäurefunktionen besitzt, eventuell in Gegenwart eines Katalysators, in Kontakt gebracht.

2. Verwendung nach Anspruch 1, **dadurch gekennzeichnet, dass** das erste Reagens, linear, verzweigt oder cyclisch, oder aromatisch, 2 bis 30 Kohlenstoffatome in der längsten Kohlenstoffkette umfasst.

3. Verwendung nach Anspruch 2, **dadurch gekennzeichnet, dass** das erste Reagens ausgewählt ist aus:
- den Polyolen, wie Glycerin, Glykol, Propylenglykol, Ethylenglykol, Polyethylenglykol, Polypropylenglykol, Neopentylglykol, Pentaerythritol, Neopentylglykol-hydroxypivalat, Dipentaerythritol, Trimethylolpropan, 2-Butyl-2-ethyl-1,3-propandiol, Sorbitol, Mannitol, Xylit, meso-Erythritol,
- den Teilestern vom Typ Acryl- oder Methacryl- oder Teilethern vom Typ Vinylder vorgenannten Polyole, teilweise dehydratisiertem Rizinusöl oder seinen Derivaten.

4. Verwendung nach Anspruch 2, **dadurch gekennzeichnet, dass** das erste Reagens aus den folgenden Verbindungen ausgewählt ist:
- Fumarsäure, Maleinsäure, Adipinsäure, Oxalsäure, Korksäure, Azelainsäure, Pimelinsäure, Glutarsäure, Bernsteinsäure, Brassylsäure, Hexahydrophthalsäure, Citraconsäure oder -anhydrid, Itaconsäure oder -anhydrid;
- Isophthalsäure, Terephthalsäure, Phthalsäureanhydrid, Trimellitsäure oder-anhydrid, den Oligomeren von Säuren.

5. Verwendung nach Anspruch 2, **dadurch gekennzeichnet, dass** das erste Reagens aus der Dimethylolpropionsäure, der Ricinolsäure ausgewählt ist.

6. Verwendung nach einem der Ansprüche 1 bis 5, **dadurch gekennzeichnet, dass** dem ersten Reagens wenigstens ein zusätzliches lineares, verzweigtes oder cyclisches Reagens mit 2 bis 30 Kohlenstoffatomen in der längsten Kette, das eine Hydroxylfunktion oder eine Carboxylfunktion umfasst und das wenigstens eine aktivierte Kohlenstoff-Kohlenstoff-Doppelbindung aufweist, zugegeben wird.

7. Verwendung nach Anspruch 6, **dadurch gekennzeichnet, dass** das zusätzliche Reagens ausgewählt ist aus:
- Allylalkohol, Vinylalkohol,
- Acrylsäure, Methacrylsäure, Linderinsäure, Elaeostearinsäure, Parinarsäure, Linolsäure und Linolensäure mit konjugierten Doppelbindungen, Isansäure, Stearidonsäure.

8. Verwendung nach einem der Ansprüche 1 bis 7, **dadurch gekennzeichnet, dass** das zweite Reagens wenigstens eine Carbonsäure- oder Carboxylester- oder Hydroxylfunktion, je nach dem oder den Radikal(en), die in dem ersten Reagens vorhanden sind, aufweist.

9. Verwendung nach dem vorhergehenden Anspruch, **dadurch gekennzeichnet, dass** wenn Schritt 1) in Gegenwart eines ersten Reagens, das wenigstens zwei Carbonsäurereste umfasst, sowie wenigstens eines zweiten Reagens, das wenigstens eine Esterfunktion umfasst, durchgeführt wird, das vor dem Schritt 2) aus Schritt 1) hervorgegangene Produkt ein weiteres Mal einem Schritt 1) in Gegenwart wenigstens eines Reagens, das wenigstens zwei Hydroxylradikale umfasst, unterzogen wird.

10. Verwendung nach Anspruch 9, **dadurch gekennzeichnet, dass** das zweite Reagens durch eine Isomerisierungsreaktion wenigstens einer Verbindung, die wenigstens eine Kohlenstoff-Kohlenstoff-Doppelbindung besitzt und aus den Ölen oder ihren Derivaten, den Carbonsäuren oder ihren Derivaten, oder deren Mischungen ausgewählt ist, erhalten wird.

11. Verwendung nach Anspruch 10, **dadurch gekennzeichnet, dass** die Verbindung aus den pflanzlichen oder tierischen Ölen sowie deren Derivaten, die nach Alkoholyse-Reaktionen erhalten werden, ausgewählt ist.

12. Verwendung nach Anspruch 10, **dadurch gekennzeichnet, dass** die Verbindung ausgewählt ist:
- aus den linearen, verzweigten oder cyclischen Carbonsäuren, die wenigstens eine Kohlenstoff-Kohlenstoff-Doppelbindung besitzen, mit 4 bis 40 Kohlenstoffatomen in der längsten Kette, vorzugsweise mit 7 bis 40 Kohlenstoffatomen, und die eventuell eine oder mehrere Hydroxylfunktionen umfassen, oder
- aus den Estern solcher Carbonsäuren, bei denen der aus dem Alkohol oder dem Polyol abgeleitete Teil linear oder verzweigt ist, 1 bis 30 Kohlenstoffatome in der längsten Kette umfasst und eventuell eine oder mehrere Kohlenstoff-Kohlenstoff-Doppelbindungen umfasst.

13. Verwendung nach einem der Ansprüche 10 bis 12, **dadurch gekennzeichnet, dass** die Isomerisierungsreaktion bei einer Temperatur im Bereich zwischen 200 und 280 °C durchgeführt wird.

14. Verwendung nach einem der Ansprüche 10 bis 13, **dadurch gekennzeichnet, dass** die Isomerisierungsreaktion in Gegenwart eines Katalysators durchgeführt wird, der aus Schwefeldioxid, den löslichen Nickel-, Palladiumsalzen, den Zeolithen, den Ionenaustauscherharzen in saurer oder basischer Form, den Basen wie Natrium-, Kaliumhydroxid, den starken Säuren wie Schwefelsäure, Phosphorsäure ausgewählt ist.

15. Verwendung nach einem der Ansprüche 10 bis 14, **dadurch gekennzeichnet, dass** die Isomerisierungsreaktion unter einer sauerstofffreien Atmosphäre durchgeführt wird.

16. Verwendung nach einem der Ansprüche 1 bis 15, **dadurch gekennzeichnet, dass** die molare Gesamtmenge an Radikalen des ersten Reagens einen Überschuss von 5 bis 50 % gegenüber den Funktionen des zweiten Reagens ausmacht.

17. Verwendung nach einem der Ansprüche 1 bis 16, **dadurch gekennzeichnet, dass** Schritt 1) bei einer Temperatur im Bereich zwischen 190 und 230 °C durchgeführt wird.

18. Verwendung nach einem der Ansprüche 1 bis 17, **dadurch gekennzeichnet, dass** Schritt 1) in Gegenwart eines Katalysators, der aus den Alkalimetallhydroxiden ausgewählt ist, durchgeführt wird.

19. Verwendung nach einem der Ansprüche 1 bis 18, **dadurch gekennzeichnet, dass** Schritt 2) in Gegenwart wenigstens eines Agens durchgeführt wird, das zwei Isocyanatfunktionen umfasst und das wenigstens einen Kohlenwasserstoffrest mit 3 bis 30 Kohlenstoffatomen, linear, verzweigt oder cyclisch, mit eventuell einer oder mehreren Kohlenstoff-Kohlenstoff-Doppelbindungen, oder aromatisch, eventuell einen oder mehrere Kohlenwasserstoffsubstituenten, lineare oder verzweigte, gesättigte oder ungesättigte, tragend, mit 1 bis 10 Kohlenstoffatomen, aufweist.

20. Verwendung nach Anspruch 19, **dadurch gekennzeichnet, dass** das Agens aus Isophorondiisocyanat, Hexamethylendiisocyanat, Toluoldiisocyanat, Diphenyl-dimethyldiisocyanat, Xylylendiisocyanat ausgewählt ist.

21. Verwendung nach einem der Ansprüche 19 oder 20, **dadurch gekennzeichnet, dass** der Gehalt an Agens 2 bis 30, vorzugsweise 5 bis 15 Gew.-% der aus Schritt 2) hervorgegangenen Verbindung ausmacht.

22. Verwendung nach einem der Ansprüche 19 bis 21, **dadurch gekennzeichnet, dass** Schritt 2) in Abwesenheit von Wasser durchgeführt wird.

23. Verwendung nach einem der Ansprüche 19 bis 22, **dadurch gekennzeichnet, dass** Schritt 2) in Gegenwart eines zusätzlichen Agens durchgeführt wird, das aus den linearen, verzweigten oder cyclischen Verbindungen mit 2 bis 30 Kohlenstoffatomen in der längsten Kohlenstoffkette, die eine Hydroxylfunktion umfassen und die wenigstens eine aktivierte Kohlenstoff-Kohlenstoff-Doppelbindung aufweisen, ausgewählt ist.

24. Verwendung nach Anspruch 23, **dadurch gekennzeichnet, dass** das zusätzliche Agens aus Allylalkohol, Acrylalkohol, Vinylalkohol ausgewählt ist.

25. Verwendung nach einem der Ansprüche 23 oder 24, **dadurch gekennzeichnet, dass** der Gehalt an zusätzlichem Agens derart ist, dass die Anzahl der Hydroxylfunktionen des zusätzlichen Agens 1 bis 50 %, vorzugsweise 1 bis 20 % der Anzahl der Hydroxylfunktionen der aus Schritt 1) hervorgegangenen Verbindung ausmacht.

26. Verwendung nach einem der Ansprüche 19 bis 25, **dadurch gekennzeichnet, dass** Schritt 2) in Gegenwart eines aus den Zinnsalzen ausgewählten Katalysators durchgeführt wird.

27. Verwendung nach einem der Ansprüche 19 bis 28, **dadurch gekennzeichnet, dass** Schritt 2) bei einer Temperatur im Bereich zwischen 50 und 100 °C durchgeführt wird.

28. Verwendung nach einem der Ansprüche 1 bis 18, **dadurch gekennzeichnet, dass** Schritt 2) in Gegenwart wenigstens eines Agens durchgeführt wird, das zwei Carbonsäurefunktionen umfasst und das wenigstens einen Kohlenwasserstoffrest mit 2 bis 30 Kohlenstoffatomen, linear, verzweigt oder cyclisch, mit eventuell einer oder mehreren Kohlenstoff-Kohlenstoff-Doppelbindungen, oder aromatisch, eventuell einen oder mehrere Kohlenwasserstoffsubstituenten, lineare oder verzweigte, gesättigte oder ungesättigte, tragend, mit 1 bis 10 Kohlenstoffatomen, aufweist.

29. Verwendung nach Anspruch 28, **dadurch gekennzeichnet, dass** das Agens aus der Fumarsäure, Maleinsäure, Adipinsäure, Oxalsäure, Korksäure, Azelainsäure, Pimelinsäure, Glutarsäure, Bernsteinsäure, Brassylsäure, Hexahydrophthalsäure, Citraconsäure oder -anhydrid, Itaconsäure oder -anhydrid; Isophthalsäure, Terephthalsäure, Phthalsäureanhydrid, Trimellitsäure oder -anhydrid, den Oligomeren von Säuren ausgewählt ist.

30. Verwendung nach einem der Ansprüche 28 oder 29, **dadurch gekennzeichnet, dass** der Schritt in Gegenwart wenigstens eines zusätzlichen Agens durchgeführt wird, das aus den linearen, verzweigten oder cyclischen Verbindungen mit 2 bis 30 Kohlenstoffatomen in der längsten Kohlenstoffkette, die eine Carboxyl- oder Hydroxylfunktion umfassen und die wenigstens eine aktivierte Kohlenstoff-Kohlenstoff-Doppelbindung aufweisen, ausgewählt ist.

31. Verwendung nach Anspruch 30, **dadurch gekennzeichnet, dass** das zusätzliche Agens aus Allylalkohol, Acrylalkohol, Vinylalkohol, Acrylsäure, Methacrylsäure, Linderinsäure, Myristoleinsäure, Palmitoleinsäure, Ölsäure, Petroselinsäure, Erucasäure, Linolsäure, Linolensäure, Isansäure, Stearidonsäure, Arachidonsäure ausgewählt ist.

32. Verwendung nach einem der Ansprüche 30 bis 31, **dadurch gekennzeichnet, dass** der Gehalt an zusätzlichem Agens derart ist, dass die Anzahl der Hydroxyl- oder Carboxylfunktionen des zusätzlichen Agens 1 bis 50 %, vorzugsweise 1 bis 20 % der Anzahl der Hydroxylfunktionen der aus Schritt 1) hervorgegangenen Verbindung ausmacht.

33. Verwendung nach einem der Ansprüche 28 bis 33, **dadurch gekennzeichnet, dass** die Reaktion in Gegenwart eines Veresterungskatalysators durchgeführt wird.

34. Verwendung nach einem der Ansprüche 28 bis 33, **dadurch gekennzeichnet, dass** die Reaktion bei einer Temperatur im Bereich zwischen 180 und 250 °C, vorzugsweise zwischen 200 und 230 °C durchgeführt wird.

35. Verwendung nach einem der Ansprüche 28 bis 34, **dadurch gekennzeichnet, dass** die Reaktion derart durchgeführt wird, dass das Wasser im Laufe seines Auftretens in dem Reaktionsgemisch entfernt wird.

36. Verwendung nach einem der Ansprüche 1 bis 35, **dadurch gekennzeichnet, dass** das Polymer in weniger als 5 Stunden, unter Trocknen bei Raumluft, einen Trockenfilm bildet.

## Claims

1. The use as a binder or additive in paint or varnish formulations of a polymer of the polyurethane or polyester type, as a liquid having a dynamic viscosity of at most 30 dPa.s (measurement at 25°C, Brookfield: mobile 7 and 50 rpm), said polymer being obtained in a method in which the following steps are applied:
1) at least one first reagent comprising at least two radicals selected from the hydroxyl radical, the carboxylic acid radical or combination thereof, is put into contact with at least one second reagent having at least one function reacting with at least one of the radicals of the first reagent; at least one of the two aforementioned reagents having one or several activated carbon-carbon double bonds; the putting into contact being optionally carried out in the presence of a catalyst;
2) the product from the previous step is put into contact with at least one agent having two isocyanate functions, or two carboxylic acid functions; optionally in the presence of a catalyst.

2. The use according to claim 1, **characterized in that** the first reagent comprises 2 to 30 carbon atoms in the longest, linear, branched or cyclic, or aromatic chain.

3. The use according to claim 2, **characterized in that** the first reagent is selected from:
- polyols like glycerol, glycol, propylene glycol, ethylene glycol, polyethylene glycol, polypropylene glycol, neo-pentylglycol, pentaerythritol, neopentylglycol hydroxypivalate, dipentaerythritol, trimethylolpropane, butyl-2 ethyl-2, 1,3-propane diol, sorbitol, mannitol, xylitol, mesoerythritol,
- acrylic or methacrylic type partial esters or vinyl type partial ethers of the aforementioned polyols, partly dehydrated castor oil or derivatives thereof.

4. The use according to claim 2, **characterized in that** the first reagent is selected from the following compounds:
- fumaric acid, maleic acid, adipic acid, oxalic acid, suberic acid, azelaic acid, pimelic acid, glutaric acid, succinic acid; brassylic acid, hexahydrophthalic acid, citraconic acid or anhydride, itaconic acid or anhydride;
- isophthalic acid, terephthalic acid, phthalic anhydride, trimellitic acid or anhydride, acid oligomers.

5. The use of according to claim 2, **characterized in that** the first reagent is selected from dimethylolpropionic acid, ricinoleic acid.

6. The use according to one of claims 1 to 5, **characterized in that** to the first reagent is added at least one additional linear, branched or cyclic reagent comprising 2 to 30 carbon atoms in the longest chain, comprising a hydroxyl function or a carboxylic and having at least one activated carbon-carbon double bond.

7. The use according to claim 6, **characterized in that** the additional reagent is selected from:
- allyl alcohol, vinyl alcohol,
- acrylic acid, methacrylic acid, linderic acid, eleostearic acid, parinaric acid, linoleic acid and linolenic acid with conjugate double bonds, isanic acid, stearidonic acid.

8. The use according to any of claims 1 to 7, **characterized in that** the second reagent has at least a one carboxylic acid or carboxylic ester or hydroxyl function depending on the radical(s) present in the first reagent.

9. The use according to the preceding claim, **characterized in that**, if step 1) is applied in the presence of a first reagent comprising at least two carboxylic acid radicals and at least one second reagent comprising at least one ester function, the product from said step 1), prior to step 2), is once again subject to step 1) in the presence of at least one reagent comprising at least two hydroxyl radicals.

10. The use according to claim 9, **characterized in that** the second reagent is obtained by a reaction for isomerizing at least one compound having at least one carbon-carbon double bond and selected from oils or derivatives thereof, carboxylic acids or derivatives thereof, or mixtures thereof.

11. The use according to claim 10, **characterized in that** said compound is selected from plant or animal oils, as well as their derivatives obtained after alcoholysis reactions.

12. The use according to claim 10, **characterized in that** the compound is selected:
- from linear, branched or cyclic carboxylic acids, having at least one carbon-carbon double bond, comprising 4 to 40 carbon atoms in the longest chain, preferably comprising 7 to 40 carbon atoms, and the optionally comprising one or several hydroxyl functions, or
- from esters of such carboxylic acids for which the portion derived from the alcohol or from the polyol is linear or branched, comprises 1 to 30 carbon atoms in the longest chain and optionally comprises one or several carbon-carbon double bonds.

13. The use according to one of claims 10 to 12, **characterized in that** the isomerization reaction is carried out at a temperature comprised between 200 and 280°C.

14. The use according to one of claims 10 to 13, **characterized in that** the isomerization reaction is carried out in the presence of a catalyst selected from sulfur dioxide, soluble salts of nickel, of palladium, zeolites, ion exchange resins in the acid or basic form, the bases like sodium, potassium hydroxide, strong acids like sulfuric acid, phosphoric acid.

15. The use according to one of claims 10 to 14, **characterized in that** the isomerization reaction is carried out under an oxygen-free atmosphere.

16. The use according to one of claims 1 to 15, **characterized in that** the total molar amount of radicals of the first reagent represents a 5 to 50% excess relatively to the functions of the second reagent.

17. The use according to one of claims 1 to 16, **characterized in that** step 1) is carried out at a temperature comprised between 190 and 230°C.

18. The use according to one of claims 1 to 17, **characterized in that** step 1) is carried out in the presence of a catalyst selected from alkaline metal hydroxides.

19. The use according to one of claims 1 to 18, **characterized in that** step 2) is carried out in the presence of at least one agent comprising two isocyanate functions and having at least one linear, branched or cyclic hydrocarbon radical comprising 3 to 30 carbon atoms, optionally having one or several carbon-carbon double bonds, or an aromatic radical optionally bearing one or several linear or branched, saturated or not, hydrocarbon substituents; comprising 1 to 10 carbon atoms.

20. The use according to claim 19, **characterized in that** the agent is selected from isophorone diisocyanate, hexamethylene diisocyanate, toluene diisocyanate, diphenyl dimethyl diisocyanate, xylylene diisocyanate.

21. The use according to one of claims 19 or 20, **characterized in that** the agent content represents 2 to 30%, preferably 5 to 15% by weight of the compound from step 2).

22. The use according to one of claims 19 to 21, **characterized in that** step 2) is carried out in the absence of water.

23. The use according to one of claims 19 to 22, **characterized in that** step 2) is applied in the presence of an additional agent selected from linear, branched or cyclic compounds comprising 2 to 30 carbon atoms in the longest carbon chain, comprising a hydroxyl function and having at least one activated carbon-carbon double bond.

24. The use according to claim 23, **characterized in that** the additional agent is selected from allyl alcohol, acryl alcohol, vinyl alcohol.

25. The use according to one of claims 23 or 24, **characterized in that** the additional agent content is such that the number of hydroxyl functions of said additional agent represents 1 to 50%, preferably 1 to 20%, of the number of hydroxyl functions of the compound from step 1).

26. The use according to one of claims 19 to 25, **characterized in that** step 2) is carried out in the presence of a catalyst selected from tin salts.

27. The use according to one of claims 19 to 26, **characterized in that** step 2) is carried out at a temperature comprised between 50 and 100°C.

28. The use according to one of claims 1 to 18, **characterized in that** step 2) is carried out in the presence of at least one agent comprising two carboxylic acid functions, and having at least one linear, branched or cyclic hydrocarbon radical comprising 2 to 30 carbon atoms, optionally having one or several carbon-carbon double bonds, or aromatic radical optionally bearing one or several linear or branched, saturated or not, hydrocarbon substituents; comprising 1 to 10 carbon atoms.

29. The use according to claim 28, **characterized in that** the agent is selected from fumaric acid, maleic acid, adipic acid, oxalic acid, suberic acid, azelaic acid, pimelic acid, glutaric acid, succinic acid; brassylic acid, hexahydrophthalic acid, citraconic acid or anhydride, itaconic acid or anhydride, isophthalic acid, terephthalic acid, phthalic anhydride, trimellitic acid or anhydride, acid oligomers.

30. The use according to one of claims 28 or 29, **characterized in that** the step is carried out in the presence of at least one additional agent selected from linear, branched or cyclic compounds, comprising 2 to 30 carbon atoms in the longest carbon chain, comprising a carboxylic or hydroxyl function and having at least one activated carbon-carbon double bond.

31. The use according to claim 30, **characterized in that** the additional agent is selected from allyl alcohol, acryl alcohol, vinyl alcohol, acrylic acid, methacrylic acid, linderic acid, myristoleic acid, palmitoleic acid, oleic acid, petroselinic acid, erucic acid, linoleic acid, linolenic acid, isanic acid, stearidonic acid, arachidonic acid.

32. The use according to one of claims 30 to 31, **characterized in that** the additional agent content is such that the number of hydroxyl or carboxylic functions of said additional agent represents 1 to 50%, preferably 1 to 20%, of the number of hydroxyl functions of the compound from step 1).

33. The use according to one of claims 28 to 33, **characterized in that** the reaction is conducted in the presence of an esterification catalyst.

34. The use according to one of claims 28 to 33, **characterized in that** the reaction is conducted at a temperature comprised between 180 and 250°C, preferably between 200 and 230°C.

35. The use according to one of claims 28 to 34, **characterized in that** the reaction is applied so that the water is removed when it appears in the reaction mixture.

36. The use according to one of claims 1 to 35, **characterized in that** the polymer forms a dry film in less than 5 hours, while drying in ambient air.
